(19) Europäisches Patentamt

European Patent Office

Office européen des brevets

(11) EP 0 801 289 A2

# (12) EUROPÄISCHE PATENTANMELDUNG

(43) Veröffentlichungstag:
15.10.1997 Patentblatt 1997/42

(51) Int. Cl.⁶: $G01B\ 11/02$

(21) Anmeldenummer: 97102925.1

(22) Anmeldetag: 22.02.1997

(84) Benannte Vertragsstaaten:
AT BE CH DE DK LI NL SE

(30) Priorität: 09.04.1996 CH 897/96

(71) Anmelder: ELPATRONIC AG
CH-6303 Zug (CH)

(72) Erfinder:
• Bucher, Rolf
5615 Fahrwangen (CH)
• Rosatzin, Martin
8428 Embrach (CH)

(54) **Verfahren und Vorrichtung zur Bestimmung der Position entlang einer Förderstrecke geförderten Gegenstandes**

(57) Der auf einem Fördermittel (2) bewegte Gegenstand wird durch einen Lichtvorhang (10) bewegt, der durch eine Mehrzahl von Lichtleiter-Querschnittswandler-Sender/Empfänger (16,22) erzeugt wird. Aufgrund deren Ausgangssignale kann mit einer Auswertschaltung (9) die Position des Gegenstandes ermittelt werden. Dies erlaubt eine genaue Positionsbestimmung mit geringem Aufwand und einfacher Justierung und Kalibrierung.

Fig. 1

EP 0 801 289 A2

**Beschreibung**

Die Erfindung betrifft ein Verfahren gemäss Oberbegriff des Anspruchs 1. Ferner betrifft die Erfindung eine Vorrichtung zur Durchführung des Verfahrens.

Die Bestimmung der Position eines entlang einer Strecke auf einem Fördermittel geförderten Gegenstandes, z.B. einer Flasche, kann auf bekannte Weise mittels einer Lichtschranke erfolgen. Die Lichtschranke gibt binäre Ja/Nein-Signale ab, die die Unterbrechung bzw. Nichtunterbrechung der Schranke anzeigt. Aufgrund dieser Signale kann ermittelt werden, dass der Gegenstand die Position der vorher auf eine bestimmte Position justierten Lichtschranke erreicht hat. Auf diese Weise ist nur eine relativ grobe Positionsbestimmung möglich, die zudem das vorherige Justieren der Lichtschranke erfordert. Durch mehrere Lichtschranken können natürlich mehrere Positionen ermittelt werden, doch steigt dabei der Einrichtungs- und Justierungsaufwand stark an.

Es ist weiter bekannt, die Position des Gegenstandes, z.B. wiederum einer Flasche, auf einem Transportband durch die Ueberwachung und Auswertung der Geschwindigkeit des Transportbandes zu verfolgen, doch ergibt sich dabei das Problem, dass der Schlupf zwischen Transportband und Gegenstand nur mit grossem Aufwand erfasst und kompensiert werden kann, wobei zudem ein erheblicher Positionsfehler entstehen kann. So kann z.B. zum Ermitteln der Istgeschwindigkeit der Gegenstand an zwei nacheinander angeordneten Lichtschranken vorbeibewegt und anhand der Zeitdifferenz die Durchschnittsgeschwindigkeit des Gegenstandes berechnet werden. Durch den Vergleich der Istgeschwindigkeit mit der Transportbandgeschwindigkeit können weitere Positionen berechnet werden.

Der Erfindung liegt deshalb die Aufgabe zugrunde, ein Verfahren zur Positionsermittlung eines auf einer Förderstrecke geförderten Gegenstandes zu schaffen, welches die obengenannten Nachteile nicht aufweist und insbesondere einfach aufgebaut ist, geringen Einrichtungs- und Jusiter- und Kalibrieraufwand benötigt und die Position mit hoher Genauigkeit feststellen kann.

Diese Aufgabe wird bei einem Verfahren der eingangs genannten Art mit den kennzeichnenden Merkmalen des Anspruchs 1 gelöst.

Dadurch, dass durch mehrere Lichtleiter-Querschnittwandler ein annähernd kontinuierlicher Lichtvorhang erzeugt wird und dass die Ausgangssignale miteinander verknüpft werden, ist eine sehr genaue Positionsbestimmung ohne grossen Aufwand erzielbar.

Die Vorrichtung zur Durchführung des Verfahrens ist durch die Merkmale des Anspruchs 7 gekennzeichnet und löst damit ebenfalls die obengenannten Aufgaben.

Im folgenden werden Ausführungsbeispiele der Erfindung anhand der Zeichnungen näher erläutert. Dabei zeigt

Figur 1 grob schematisch eine Ansicht einer erfindungsgemässen Vorrichtung in Förderrichtung;
Figur 2 ebenfalls schematisch eine Ansicht von oben;
Figur 3 schematisch eine Ansicht ähnlich derjenigen von Figur 2 zur Erläuterung einer ersten Art der Positionsbestimmung; und
Figur 4 schematisch eine Ansicht ähnlich derjenigen von Figur 2 zur Erläuterung einer weiteren Art der Positionsbestimmung.

Nachfolgend werden Beispiele der Erfindung anhand des Transportes von Flaschen beschrieben. Dies können z.B. Mehrweg-Kunststoffflaschen sein, die in einer Flaschenprüfungsanlage transportiert werden, z.B. auf einem Förderband. Es ist aber festzuhalten, dass die Erfindung nicht auf dieses bevorzugte Beispiel bzw. Anwendungsgebiet beschränkt ist, sondern generell bei der Förderung von Gegenständen angewendet werden kann.

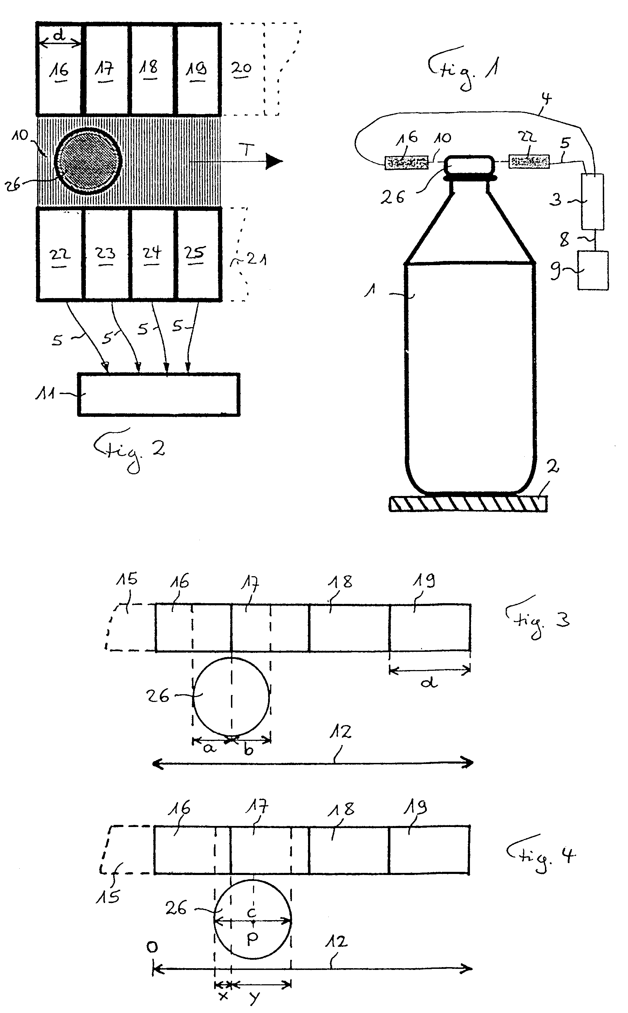

Figur 1 zeigt grob schematisch eine Flasche 1 auf einem Förderband 2. Die Förderrichtung verläuft senkrecht zur Zeichnungsebene. Ein Teil der Flasche, in diesem Fall ihr Mündungsteil 26, ragt in den Lichtvorhang, der durch mehrere Lichtleiter-Querschnittwandler erzeugt wird. Diese bestehen jeweils aus Sender und Empfänger, wobei in Figur 1 einer der Sender 16 und der zugehörige Empfänger 21 ersichtlich ist. Der Sender 16 ist von einem Lichtleitergerät 3, das eine Lichtquelle enthält, über ein Lichtleiterkabel 4 gespiesen. Im Sender 16 wird das Licht auf ein Lichtleiterbündel aufgeteilt, das zeilenförmig angeordnet ist und einen an der Stirnfläche 6 des Senders austretenden horizontal liegenden Lichtvorhang 10 aus einer Vielzahl von Einzelstrahlen erzeugt. Die Breite des Austrittsbereichs kann dabei z.B. 20 mm betragen, wobei die aneinander angrenzenden Einzelstrahlen jeweils einen Durchmesser 0,2 mm haben. Der Empfänger 22 weist entsprechende Empfangselemente auf und führt das empfangene Licht über ein Lichtleiterkabel 5 zum Lichtleitergerät 3, in welchem ein analoges elektrisches Signal, z.B. eine Spannung, erzeugt wird, die proportional dem empfangenen Licht ist. Ueber eine Leitung 8 wird das jeweilige Signal an eine Auswertschaltung 9 abgegeben, die aus den elektrischen Signalen entsprechend der von den Empfängern empfangenen Lichtmenge die Position der Flaschenmündung ermittelt, wie nachfolgend erläutert wird. Die genannten Lichtleiter-Querschnittswandler sind handelsübliche Bauteile z.B. vom Typ FSF 050A3021 des Herstellers Baumer Electric, Schweiz.

Figur 2 zeigt die Anordnung nach Figur 1 schematisch von oben. Die Sender 16, 17, 18, 19 und allenfalls 20 oder noch weitere Sender sind nebeneinanderliegend angeordnet, so dass ein kontinuierlicher Lichtvorhang 10 erzeugt wird, in den die Mündung 26 der sich in Richtung des Pfeiles T bewegenden Flasche ragt. Die entsprechenden Empfänger 22, 23, 24, 25 und allenfalls noch 21 empfangen die einzelnen Strahlen des Lichtvorhanges und geben Signale über die Lichtleiterkabel 5 an das Lichtleitergerät und die Auswerteschaltung ab, die in Figur 2 zusammen als Block 11 dargestellt sind. Die in Figur 2 gezeigten Lichtleiter-Querschnittswandler weisen z.B. eine Breite d des Austrittsbereichs auf, die 20 mm beträgt. Die entsprechende analoge Ausgangsspannung kann z.B. 10 Volt betragen. Das heisst, wenn der Lichtvorhang zwischen Sender 16 und Empfänger 22 nicht unterbrochen ist, so wird aus der vom Empfänger 22 empfangenen Lichtmenge ein Signal von 10 Volt abgeleitet. Eine Lichtvorhangbreite von 20 mm entspricht somit 10 Volt. Das Spannungssignal ist proportional zum ungestörten, bzw. durch den Gegenstand nicht zwischen Sender und Empfänger abgedeckten Lichtvorhang. Werden 0 %, also 0 mm des Lichtvorhanges abgedeckt, so entspricht das Signal wie gesagt $U_{eff}$ = 10 V, werden 0,2 mm abgedeckt, so entspricht das Signal $U_{eff}$ = 9,9 V, werden 2 mm abgedeckt, so entspricht das Signal $U_{eff}$ = 9,0 V usw. Natürlich sind je nach eingesetztem Typ andere Spannungsbereiche möglich und auch die maximale Auflösung von hier z.B. 0,2 mm (bzw. ± 0,1 mm) und 0,1 Volt kann je nach geforderter Genauigkeit anders sein.

Figur 3 zeigt nun ein erstes Beispiel zur Bestimmung der Position des Gegenstandes, wobei zur Vereinfachung der Zeichnung nur die Sender 16-19 und der Gegenstand 26 dargestellt sind. In diesem Beispiel wird der Gegenstand 26 entlang der Strecke 12 in der der Lichtvorhang wirksam ist nicht verfolgt, sondern es wird über einen eingestellten Schwellwert festgestellt, wenn der Gegenstand eine bestimmte Position erreicht hat. In dem gezeigten Beispiel deckt der Gegenstand einen Streckenabschnitt a des ersten Senders 16 und einen Streckenabschnitt b des zweiten Senders 17 ab. Die aufgrund des Empfängersignals des zum Sender 16 gehörenden Empfängers erzeugte Spannung beträgt $U_{eff16}$ = 2,3 Volt, was aufgrund der vorgängig beispielhaft angegebenen Zuordnung von 20 mm = 10 Volt, also einem abgedeckten Bereich von 20 mm - (2x $U_{eff16}$) = 15,4 mm entspricht. Diese Angabe alleine erlaubt noch keine Positionsbestimmung, da nicht eindeutig bestimmt ist, wo sich die abgedeckte Strecke von 15,4 mm entlang der 20 mm Breite von Sender 16 bzw. Empfänger 22 befindet. Es wird daher das Signal von dem dem Sender 17 zugeordneten Empfänger ebenfalls ausgewertet, wobei diesfalls z.B. als Kriterium festgelegt ist, dass dieses Signal kleiner gleich 8 Volt ist bzw. die Strecke b, die abgedeckt ist grösser als 4 mm ist. Mit solchen Schwellwerten kann also das Erreichen einer vorbestimmten Position p durch den Gegenstand mit hoher Genauigkeit festgestellt werden, wenn die Abmessung c des Gegenstandes in Streckenrichtung bekannt ist. Die Spannungen werden mit einer Frequenz abgetastet und ausgewertet, die der Fördergeschwindigkeit des Gegenstandes entlang der Strecke 12 angepasst ist, damit die Position erfasst werden kann. So können die Spannungen z.B. periodisch in Digitalsignale umgewandelt werden und durch einen Rechner ausgewertet werden; auch eine analoge Signalverarbeitung und Auswertung ist aber möglich. Wenn sich die gewählte Position p z.B. im Bereich der Sender 18, 19 befindet, so müssen die entsprechenden Signale ausgewertet werden und die Signale der Empfänger der Sender 16 und 17 bleiben unberücksichtigt. Für grosse Gegenstände kann es auch nötig sein, zwischen den Sendern 16-19 bzw. den Empfängern definierte Abstände vorzusehen. Natürlich kann auch die Anzahl der Sender/Empfänger-Paare entsprechend den gestellten Anforderungen gewählt werden.

Anhand von Figur 4 wird nun eine weitere Positionsbestimmungsart erläutert, bei der die Flasche 26 "verfolgt" wird, d.h. die genaue Position der Flasche im Lichtvorhang kann jederzeit (innerhalb des gewählten Zeittaktes zur Spannungsbestimmung) bestimmt werden. Voraussetzung dafür ist allerdings - anders als im ersten Beispiel - dass die Abmessung c des Gegenstandes grösser ist als die Breite d eines Senders bzw. Empfängers. Andernfalls gibt es Streckenabschnitte, in welchen die Position nicht eindeutig bestimmbar ist.

Figur 4 zeigt zur Vereinfachung wiederum nur die Sender 16-19 und nicht die zugehörigen Empfänger und das Lichtleitergerät und die Auswertschaltung. Es werden z.B. folgende Signale festgestellt für Sender 16 $U_{eff16}$ = 6,5 Volt, für Sender 17 $U_{eff17}$ = 1 Volt, für Sender 18 und 19 $U_{eff18}$ und $U_{eff19}$ je 10 Volt. Abgedeckt sind daher (mit der bisherigen Proportionalität von 20 mm = 10 Volt auch in diesem Beispiel) beim Sender 16 20 mm -(2x $U_{eff16}$) = 7 mm, d.h. der Streckenabschnitt x ist 7 mm, und beim Sender 17 20 mm -(2x$U_{eff17}$) = 18 mm = Streckenabschnitt y. Der gesammte abgedeckte Streckenteil ist somit 25 mm lang, was der Länge des Gegenstandes bzw. dem Durchmesser D der Flaschenmündung entspricht. Die Position P der Mitte des Gegenstandes vom Nullpunkt O der Strecke 12 kann somit ermittelt werden, wenn von der Breite d des Senders der Streckenabschnitt x abgezählt wird und der halbe Durchmesser addiert wird: (d-x) + D/2 = P . Im vorliegenden Fall: (20-7) + 25/2 = 25,5 mm. Sofern der Nullpunkt weiter vorne liegt, also z.B. noch ein Sender 15 vorgesehen wäre, so ist natürlich die entsprechende Breite d noch dazuzuzählen bzw. wenn die entsprechende Positionsbestimmung bei den Sendern 18 und 19 erfolgt wäre, so wäre die Breite des Senders 16 und des Senders 17, also 2 · d dazuzuzählen. Anstelle der Mitte des Gegenstandes kann als Position auch lediglich dessen Anfang oder Ende ermittelt werden, was das Ermitteln des Durchmessers unnötig macht.

Bei der Einstellung der Vorrichtung kann eine geräteseitige Justierung und eine in der Auswertschaltung z.B. durch ein Programm vorzunehmende Kalibrierung unterschieden werden. Bei der Justierung des Empfängers wird das analoge Signal mit einem am Lichtleitergerät integrierten Potentiometer auf ein definiertes Ausgangssignal abgeglichen. Beispiel: Bei einer Breite des Querschnittwandlers von 20 mm soll 1 V = 2 mm entsprechen. Der Empfänger wird im nicht abgedeckten Zustand auf 10 V abgeglichen. Temperaturunterschiede und Verschmutzung verändern das Ist-Signal der Empfänger. Es ist daher sinnvoll die Empfänger möglichst oft zu kalibrieren. Bei der Kalibration der Maschine oder der Sensorik wird das analoge Signal des Empfängers, im nicht abgedeckten Zustand, als Referenzsignal bzw. Faktor für die Positionsberechnung verwendet.

Beispiel: Referenzsignal A = 10 Volt = Sollsignal = 100 %, ist das Signal kleiner oder grösser, so wird der Wert des jeweiligen Empfängers mit dem entsprechenden Faktor multipliziert: gemessenes Referenzsignal R = 9,8 Vr des ersten Empfängers. Faktor F = 10/9.8 = 1.02. Position der Flasche gemäss obigem Beispiel $(2xU_{eff16} \times F_{16}) + [20-(2xU_{eff16} \times F_{16})+20-(2xU_{eff17}xF_{17})]/2 = P$ , wobei $F_{17}$ der dem zweiten Empfänger entsprechende Faktor ist.

Das Erkennen von Deckeln oder groben Defekten an der Mündung kann als Zusatzfunktion ausgeführt werden. Da der Durchmesser der Mündung für die Positionsbestimmung bekannt ist, kann dieser Wert auch mit Referenzwerten verglichen werden. Ist z.B. der Wert grösser als ein bestimmter Referenzwert, so ist entweder die Mündung stark beschädigt, oder es ist ein Deckel auf der Flasche. Ist der Wert kleiner, so ist die Mündung stark beschädigt.

**Patentansprüche**

1. Verfahren zur Bestimmung mindestens der Position eines entlang einer Strecke (12) bewegten Gegenstandes (1, 26), dadurch gekennzeichnet, dass entlang der Strecke mindestens zwei an einer Lichtquelle (3) angeschlossene Lichtleiter-Querschnittswandler-Sender/ Empfänger (16,22, 17,23, 18,24, 19,25) angeordnet sind, die einen Lichtvorhang (10) erzeugen, der vom Gegenstand beim Durchlaufen der Strecke (12) teilweise unterbrochen wird, wobei für jedes Paar Lichtleiter-Querschnittswandler-Sender/Empfänger ein elektrisches Signal erzeugt wird, das proportional zum unterbrochenen Streckenabschnitt (a,b; x,y) ist, und dass die elektrischen Signale miteinander verknüpft werden, um die Position des Gegenstandes zu ermitteln.

2. Verfahren nach Anspruch 1, dadurch gekennzeichnet, dass das Erreichen einer vorbestimmten Position derart ermittelt wird, dass die elektrischen Signale mit Grenzwerten verglichen werden.

3. Verfahren nach Anspruch 1, dadurch gekennzeichnet, dass eine gegenwärtige Position ermittelt wird, indem die aktuellen elektrischen Signale ausgewertet werden, um den Abstand des Endes oder des Anfangs des Gegenstandes vom Anfang der Strecke (12) zu ermitteln.

4. Verfahren nach Anspruch 3, dadurch gekennzeichnet, dass die Position der Mitte des Gegenstandes durch Addition der unterbrochenen Streckenabschnitte ermittelt wird.

5. Verfahren nach einem der Ansprüche 1 bis 4, dadurch gekennzeichnet, dass zur Kalibrierung für jedes Sender/Empfänger-Paar ein Faktor ermittelt wird, um welchen der Istwert des elektrischen Signals vom Sollwert abweicht, und dass die erzeugten elektrischen Signale bei der Auswertung mit dem Faktor multipliziert werden.

6. Verfahren nach einem der Ansprüche 1 bis 5, dadurch gekennzeichnet, dass die durch Addition der unterbrochenen Streckenabschnitte ermittelte Länge des Gegenstandes mit einem Sollwert verglichen wird, um defekte Gegenstände zu ermitteln.

7. Vorrichtung zur Bestimmung mindestens der Position eines auf einem Fördermittel (2) entlang einer Strecke (12) bewegten Gegenstandes (1, 26), dadurch gekennzeichnet, dass entlang dem Fördermittel (2) mindestens zwei an einem Lichtleitergerät (3) angeschlossene Lichtleiter-Querschnittswandler-Sender/Empfänger (16,22, 17,23) angeordnet sind, die einen Lichtvorhang (10) erzeugen, dass das Lichtleitergerät (3) zur Erzeugung eines elektrischen Signals für jedes angeschlossene Paar Sender/Empfänger ausgestaltet und an eine Auswertschaltung (9) angeschlossen ist, welche zur Verknüpfung der elektrischen Signale ausgestaltet ist.

Fig. 1

Fig. 2

Fig. 3

Fig. 4